# EUROPÄISCHE PATENTSCHRIFT

(11) **EP 1 720 743 B1**
(45) Veröffentlichungstag und Bekanntmachung des Hinweises auf die Patenterteilung: **14.01.2009**
(21) Anmeldenummer: 05743546.3
(22) Anmeldetag: 11.02.2005
(51) Int. Cl.: B60R 22/26

(54) **SITZ MIT EINER VORRICHTUNG ZUM AUFRICHTEN EINES GURTSCHLOSSES**
SEAT COMPRISING A DEVICE FOR INSTALLING A BELT BLOCKING SYSTEM
SIEGE EQUIPE D'UN DISPOSITIF POUR MONTER UN SYSTEME DE VERROUILLAGE DE CEINTURE

(30) Priorität: 27.02.2004 DE 102004010694
(43) Veröffentlichungstag der Anmeldung: 15.11.2006
(73) Patentinhaber: Sitech Sitztechnik GmbH, 38442 Wolfsburg (DE)
(72) Erfinder: HUBER, Alexander, Tarc, 38118 Braunschweig (DE); SCHAFMEISTER, Alfons, 34414 Warburg (DE); SÜLEYMANN, Semir, 38557 Osloss (DE); GRAUDENZ, Gunther, 38444 Wolfsburg (DE)
(74) Vertreter: Schneider, Henry
(86) Internationale Anmeldenummer: PCT/EP2005/001591
(87) Internationale Veröffentlichungsnummer: WO 2005/082685

(56) Entgegenhaltungen:
- DE-A1- 4 338 684
- US-A- 5 332 261
- PATENT ABSTRACTS OF JAPAN Bd. 014, Nr. 300 (M-0991), 28. Juni 1990 (1990-06-28) -& JP 02 095953 A (SUZUKI MOTOR CO LTD), 6. April 1990 (1990-04-06)

## Beschreibung

Die Erfindung betrifft einen Sitz, insbesondere einen Kraftfahrzeugsitz, mit einer Vorrichtung zum Aufrichten eines Gurtschlosses.

Es ist bekannt, Gurtschlösser, zum Beispiel beim Umklappen einer Rückenlehne eines Sitzes, innerhalb eines Sitzteiles in Ausnehmungen versenkbar vorzusehen, um so zum Beispiel einen möglichst großen Umklappwinkel der Rückenlehne zu erreichen oder auch den erweiterten Kofferraum von störenden Gurtschlössern freizuhalten, die auch durch zu transportierendes Sperrgut beschädigt werden könnten. Dies ermöglicht zum Beispiel ein größeres Beladevolumen und ein bequemeres Beladen des Kraftfahrzeugs sowie geringere Belastungen auf die Gurtschlösser und auf deren Befestigung.

In einer Ausführungsform zum Beispiel bewegen sich beim Umklappen der Rückenlehne auf das Sitzteil zusätzlich das Sitzteil und die Rückenlehne gemeinsam nach vorne in eine Nichtgebrauchsstellung des Sitzes. Hierbei und im Folgenden bezeichnet der Begriff 'vorne' die Vorwärtsfahrtrichtung des Fahrzeugs. Beim Wiederaufrichten der Rückenlehne bewegen sich Sitzteil und Rückenlehne gemeinsam in die entgegengesetzte Richtung, in die Gebrauchsstellung des Sitzes. Hierbei kann es vorkommen, dass die versenkbar angeordneten Gurtschlösser nicht selbsttätig in die Gebrauchsstellung des Sitzes zurückschwenken (zum Beispiel aufgrund einer zu geringen, durch die Federarmbefestigung des Gurtschlosses bereitgestellten Rückstellkraft), das heißt innerhalb der Ausnehmungen des Sitzteils verbleiben. Dies kann auch noch durch auf dem Sitzteil liegende Gegenstände begünstigt oder auch von ihnen alleine hervorgerufen werden. In einem solchen Fall können, abgesehen von einer schwierigen Handhabbarkeit eines solch versenkten Gurtschlosses, die Gurtschlösser und auch die Federarme, an welchen die Gurtschlösser mit dem Fahrzeug oder dem Sitz befestigt sind, durch das sich zurückbewegende Sitzteil hohen mechanischen Belastungen ausgesetzt werden.

Der Erfindung liegt daher die Aufgabe zugrunde, einen Sitz, insbesondere einen Fahrzeugsitz, zur Verfügung zu stellen, bei welchem bei der Bewegung des Sitzes aus einer Nichtgebrauchsstellung, bei welcher der Sitz für etwa den Transport sperriger Güter um- oder auseinander geklappt beziehungsweise verschoben ist, in die für den Personentransport vorgesehene Gebrauchsstellung ein selbsttätiges Aufrichten des Gurtschlosses erfolgt und so die oben beschriebenen Nachteile vermieden werden.

Dieser Aufgabe wird zum Beispiel in der JP02095953 dadurch gelöst, dass das Gurtschloss über einen Hebel mechanismus so mit der Rückenlehne verbunden ist, dass beim Aufklappen der Rückenlehne das Gurtschloss in die gebrauchstellung gebracht wird. Gemäß der vorliegenden Erfindung wird dagegen dieser Aufgabe durch einen Sitz mit einer Gurtschlossrampe mit den im unabhängigen Anspruch 1 genannten Merkmalen gelöst. Hierbei wird dem Gurtschloss beim Zurückbewegen des Sitzes in die Gebrauchsstellung eine Auflaufschräge zugeordnet, die ein selbsttätiges Aufrichten des Gurtschlosses aus der Ausnehmung des Sitzteils unerstützt.

Bei dem Sitz (bevorzugt ein Kräftfahrzeugsitz, insbesondere ein Rücksitzbankabschnitt) ist einem Sitzteil oder einer Rückenlehne des Sitzes die Gurtschlossrampe derart zugeordnet, dass beim Bewegen des Sitzes aus der Nichtgebrauchsstellung in die Gebrauchsstellung die Gurtschlossrampe ein Gurtschloss eines Sieherheitsrückhaftesystems aus einer Ausnehmung im Sitzteil beziehungsweise aus einer Ausnehmung in der Rückenlehne herausschwenkt beziehungsweise herausbewegt.

Diese Anordnung vermeidet obige Nachteile, das heißt, das Gurtschloss kann nicht mehr in der Ausnehmung verbleiben. Die Gurtschlossrampe bewegt das Gurtschloss selbsttätig aus der Ausnehmung heraus, so dass es zu keinen Beschädigungen des Gurtschlosses und dessen Befestigung durch das Sitzteil kommen kann. Die Erfindung stellt sicher, dass das Gurtschloss bei der Aufrichtung der Rückenlehne immer aus der Ausnehmung heraustritt und somit bequem zu handhaben ist.

In einer bevorzugten Ausführungsform der Erfindung ist der Gurtschlossrampe eine mit der Fahrzeug karosserie fest verbundene Gleitschiene zugeordnet, auf welcher ein abgefedertes Element der Gurtschlossrampe in wenigstens einer Richtung, bevorzugt im Wesentlichen vertikal, geführt ist.

Das abgefederte Element und die restliche Gurtschlossrampe teilen die Rampenfläche der Gurtschlossrampe in zwei gegeneinander verschwenkbare Abschnitte. Mittels eines frei wählbaren Höhenprofils der Gleitschiene ist es möglich, die Aufrichtbewegung des Gurtschlosses zum Beispiel nach praktikablen oder ästhetischen Maßstäben zu beeinflussen.

In einer bevorzugten Ausführungsform ist das abgefederte Element an der Gurtschlossrampe mittels eines Filmscharniers an der restlichen Gurtschlossrampe einstückig ausgebildet.

Bevorzugt wird dies dadurch erreicht, dass die Rampe an der bevorzugten Verschwenkstelle (Position des Filmscharniers) der beiden Rampenabschnitte dünner ausgebildet ist als die restliche Rampe. Dies gewährleistet einen homogenen Bewegungsübergang des Gurtschlosses beim Wechsel vom unteren Rampenabschnitt zum oberen.

Bevorzugt ist die Gurtschlossrampe einstückig und aus Kunststoff gefertigt.

Ferner wird mit Anspruch 12 ein Sitz bereitgestellt, bevorzugt ein Rücksitzbankabschnitt, der zweiteilig ausgebildet ist und wenigstens zwei Gurtschlossrampen aufweist, wobei wenigstens eine der Gurtschlossrampen derart ausgebildet ist, dass sie mit einer Gleitschiene zusammenwirkt und die andere ohne eine solche Gleitschiene auskommt.

In einer bevorzugten Ausführungsform befinden sich bei einer solchen unterteilten Rücksitzbank bevorzugt an einer 40%-Seite der einen Sitzseite die Gurtschlossrampe mit der mit ihr zusammenwirkenden Gleitschiene und an der 60%-Seite des Sitzes eine Gurtschlossrampe ohne korrespondierende Gleitschiene, da beim Überführen der 60%-Seite eines Rücksitzes in seine Gebrauchsstellung lediglich während der horizontalen Bewegung einer Sitzwanne das Gurtschloss geführt werden muss. Hierdurch kann die Anordnung der Gurtschlossrampen an das Vorhandensein von mit der Karosserie verbundenen Führungsschienen für die Sitze angepasst werden.

Dadurch, dass an der 60%-Seite der Rücksitzbank eine Gurtschlossaufrichtung ohne Gleitschiene verwendet werden kann, sind die Kosten vermindert, da ein Bauteil weniger hergestellt und eingebaut werden muss.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert: Es zeigen:
- Figur 1: einen herkömmlichen Fahrzeugsitz in Gebrauchsstellung in einer Seitenansicht;
- Figur 2: ein Gurtschloss in Gebrauchsstellung mit einer dazugehörigen Gurtschlossrampe gemäß eines ersten Ausführungsbeispiels in einer 3-D-Ansicht;
- Figur 3: die Gurtschlossrampe aus Figur 2 in einer 3-D-Ansicht;
- Figur 4: ein Gurtschloss in Nichtgebrauchsstellung mit dazugehörige Gleitschiene und Gurtschlossrampe gemäß eines zweiten Ausführungsbeispiels in einer Seitenansicht;
- Figur 5: die Gurtschlossrampe aus Figur 4 mit einer mit ihr zusammenwirkenden Gleitschiene in einer 3-D-Ansicht und
- Figur 6: die Gurtschlossrampe aus Figur 4 mit einer mit ihr zusammenwirkenden Gleitschiene in einer weiteren 3-D-Ansicht.

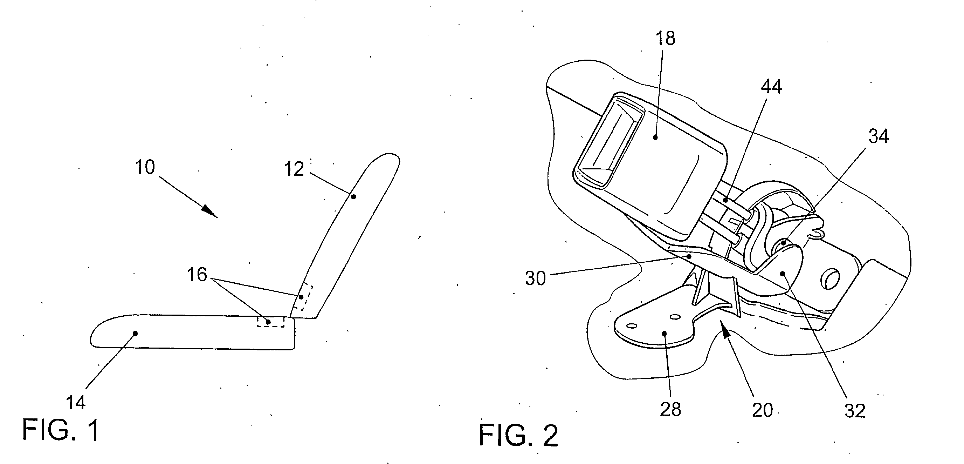

Figur 1 zeigt einen herkömmlichen, nachfolgend als Sitz 10 bezeichneten Fahrzeugsitz, der bevorzugt eine geteilte Rücksitzbank beziehungsweise einen Abschnitt davon ist, in Gebrauchsstellung, mit nahezu aufrecht stehendem Rückenlehnenteil. In dieser Position eignet sich der Sitz 10 zum Befördern eines Fahrzeuginsassen. Der Sitz 10 weist hauptsächlich ein Sitzteil 14 und eine Rückenlehne 12 auf. Je nach Sicherheitssystem des Fahrzeugs weist entweder das Sitzteil 14 oder die Rückenlehne 12 eine Ausnehmung 16 auf, in welcher ein Gurtschloss 18 (siehe Figur 2) Platz finden kann.

Im Folgenden beziehen sich die Angaben auf einen Sitz 10, bei welchem sich die Ausnehmung 16 im Sitzteil 14 befindet und die Rückenlehne 12 nach vorne auf das Sitzteil 14 klappbar ist. Gleichzeitig dazu oder auch zeitlich danach bewegen sich hierbei das Sitzteil 14 und die Rückenlehne 12 nach vorne in die so genannte Nichtgebrauchsstellung des Sitzes 10, um mehr Platz im Laderaum des Fahrzeugs zu schaffen. Die Erfindung ist nicht auf eine solche Variante beschränkt, sondern andere Varianten und Kombinationen hiervon, sowohl mit obiger Variante als auch mit den folgenden (nicht abschließend), sollen ausdrücklich zusammen mit der Erfindung anwendbar sein. So ist es zum Beispiel möglich, die Ausnehmung 16 für das Gurtschloss 18 in der Rückenlehne 12, ein Umklappen der Rückenlehne 12 nach hinten in den Laderaum des Fahrzeugs, ein Verschwenken eines zusammengeklappten Sitzes 10 nach vorne an den Fahrersitz heran, ein Umklappen der Rückenlehne nach vorne unter gleichzeitigem Verschieben des Sitzteils nach hinten und so weiter vorzusehen. Dies gilt ebenso für ein zweites Ausführungsbeispiel der Erfindung.

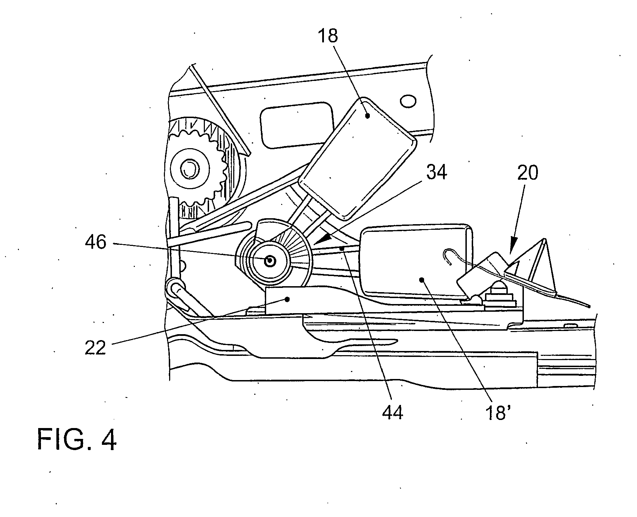

Befindet sich der Sitz 10 in der Gebrauchsstellung, so befindet sich das Gurtschloss 18 nicht vollständig in der Ausnehmung 16, sondern steht aus ihr wenigstens teilweise, hervor, das heißt, es ist aus der Ausnehmung 16 herausgeschwenkt. Dies ermöglicht eine einfache Handhabbarkeit des Gurtschlosses 18 durch einen Fahrzeuginsassen. Eine solche Position des Gurtschlosses 18 zeigt Figur 2, allerdings ohne Sitzteil 14, Rückenlehne 12 und Ausnehmung 16. Die Figuren 2 und 4 zeigen eine Befestigung des Gurtschlosses 18 (Gurtschlossbefestigung 34) am Sitz 10 oder über Befestigungsbauteile am Rahmen des Fahrzeugs. Das Gurtschloss 18 ist über Federarme 44 an einem Bolzen 46 derart befestigt, dass das Gurtschloss 18 zusammen mit den Federarmen 44 um den Bolzen herum schwenkbar ist. Dieser Aufbau ermöglicht es dem Gurtschloss 18, sich zwischen der Nichtgebrauchsstellung in der Ausnehmung 16 und der Gebrauchsstellung des Sitzes 10 hin- und herzubewegen (zu schwenken). Andere Gurtschlossbefestigungen 34 sind ebenfalls denkbar. So ist es möglich, dass das Gurtschloss 18 nicht schwenkbar an einem Bolzen 46 befestigt ist, sondern zum Beispiel translatorisch verschiebbar mit einer Gurtschlossbefestigung 34 verbunden ist. In einem solchen Fall lässt sich das Gurtschloss 18 nicht aus der Ausnehmung 16 herausschwenken, sondern herausbewegen. Zeitlich dem Herausbewegen vorausgehend ist in entsprechender Weise das Gurtschloss 18 nicht in die Ausnehmung 16 hinverschwenkt worden, sondern in diese hineinbewegt worden.

Um mehr Raum im hinteren Teil des Fahrzeugs bereitzustellen, wird die Rückenlehne 12 auf das Sitzteil 14 geklappt und das Sitzteil 14 wird anschließend oder zeitgleich damit mit der darauf liegenden Rückenlehne 12 nach vorne in die Nichtgebrauchsstellung verschoben. Beim Umklappen der Rückenlehne 12 und dem nach vorne gerichteten Verschieben des Sitzteils 14 wird das Gurtschloss 18 von der Rückenlehne 12 immer weiter in die Ausnehmung 16 gedrückt. In der Nichtgebrauchstellung des Sitzes 10 ist das Gurtschloss 18 schließlich vollständig in der Ausnehmung 16 versenkt, das heißt, es ist in die Ausnehmung 16 hineinverschwenkt. Eine solche Position des versenkten Gurtschlosses 18' zeigt Figur 4. Die Ausnehmung 16 hat sich allerdings nach vorne bewegt, so dass vorne noch Freiraum in der Ausnehmung 16 verbleibt, welche nicht mehr vom Gurtschloss 18 ausgefüllt wird. Die Ausnehmung 16 ist daher so dimensioniert, dass das Gurtschloss 18 beim Zurückbewegen des Sitzes 10 vom Sitz 10 nicht beschädigt wird. Allerdings sollte die Ausnehmung 16 nicht zu groß sein, damit ästhetische Gesichtspunkte des Sitzes 10 nicht berührt werden.

Beim Überführen des Sitzes 10 aus der Nichtgebrauchsstellung in die Gebrauchsstellung kann es -wie oben schon angeführt - vorkommen, dass das Gurtschloss 18 in der Ausnehmung 16 verbleibt, was nachteilig für das Gurtschloss 18, dessen Befestigung am Rahmen/Karosserie oder dem Sitz 10, und der Handhabbarkeit des Gurtschlosses 18 sein kann. Um dies zu verhindern, wird dem Gurtschloss 18 eine Auflaufschräge in Form einer Rampenfläche 26 einer Gurtschlossrampe 20 zugeordnet. In diesem ersten Ausführungsbeispiel ist die Gurtschlossrampe 20 fest mit dem Sitzteil 14 derart verbunden (festgelegt), dass die Gurtschlossrampe 20 mit ihrer Rampenfläche 26, beim Überführen des Sitzes 10 aus der- Nichtgebrauchsstellung in die Gebrauchsstellung, das Gurtschloss 18 zuerst beginnend mit seiner Vorderkante sanft der Rampenschräge entlang nach oben bis in die gewünschte Position, in welcher das Gurtschloss 18 für einen Fahrzeuginsassen bequem bedienbar ist, bewegt.

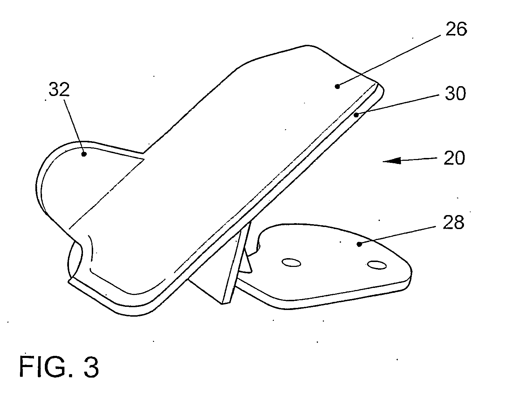

Die Gurtschlossrampe 20 ist in diesem Ausführungsbeispiel (siehe Figur 3) bevorzugt einstückig und aus Kunststoff ausgebildet. Sie besteht aus dem als Mitnehmer konzipierten Rampenfuß 28, der Rampe 30 mit ihrer Rampenfläche 26 und optional einer seitlichen Abdeckung 32. Die Rampe 30 kann an ihren beiden Längsseiten nach oben gebogen sein, um eine bessere Führung des Gurtschlosses 18 auf der Rampe 30 zu ermöglichen. Der mit der Rampe 30 bevorzugt einstückig verbundene Rampenfuß 28 weist geeignete Mittel zum Beispiel Bohrungen auf, mittels welcher die Gurtschlossrampe 20 am Sitzteil 14 festlegbar ist. In einer anderen Ausführungsform kommt hier die Rückenlehne 12 in Betracht. Die Abdeckung 32 hat primär zwei Funktionen; einerseits dient sie dem seitlichen Schutz einer Gurtschlossbefestigung 34 in der Gebrauchsstellung des Sitzes 10; andererseits dient sie der Positionierung des Gurtschlosses 18 in der Nichtgebrauchsstellung des Sitzes 10 und auch der Führung des Gurtschlosses 18 beim Überführen des Sitzes 10 von der Nichtgebrauchsstellung in die Gebrauchsstellung.

Figuren 4 bis 6 zeigen eine zweite Ausführungsform der erfindungsgemäßen Gurtschlossrampe 20. Wie auch bei der oben erläuterten Gurtschlossrampe 20 ist die Gurtschlossrampe 20 in diesem Ausführungsbeispiel bevorzugt einstückig und aus Kunststoff ausgebildet. Sie weist ebenso einen Rampenfuß 28, eine Rampe 30 mit ihrer Rampenfläche 26 und optional eine seitliche Abdeckung 32 auf. Die Funktion dieser Bestandteile ist denen des ersten Ausführungsbeispiels ähnlich; daher wird hier nicht weiter darauf eingegangen.

Die Rampe 30 ist in diesem Ausführungsbeispiel jedoch zweiteilig ausgeführt. Sie besteht aus zwei Rampenabschnitten 40 (oben) und 42 (unten), die über ein Filmscharnier 38 gegeneinander in einem gewissen Winkel schwenkbar miteinander bevorzugt einstückig verbunden sind. Das Filmscharnier 38 ermöglicht einen gleichmäßige (stetigen) Bewegungsübergang des Gurtschlosses 18 vom ersten Rampenabschnitt 40 zum zweiten Rampenabschnitt 42, so dass das auf der Rampenfläche 26 abgleitende Gurtschloss 18 ohne einen abrupten Wechsel seiner Bewegungsrichtung vertikal geführt ist. Ferner ist das Filmscharnier 38 derart ausgelegt, das heißt mit einer gewissen Steifheit ausgestattet, dass es die beiden Rampenabschnitte 40 und 42 federnd miteinander verbindet. Wenn keine Kräfte auf die Gurtschlossrampe 20 wirken, so bewegen sich die beiden Rampenabschnitte 40 und 42 selbsttätig in ihre durch Herstellung vorgewählte Ausgangsposition zurück. In diesem Ausführungsbeispiel liegen die beiden Rampenabschnitte 40 und 42 in unbelastetem zustand nahezu in einer Ebene. Andere durch Herstellung (zum Beispiel Spritzgießen) mögliche Ruhelagen der beiden Rampenabschnitte 40 und 42 sind natürlich ebenso denkbar.

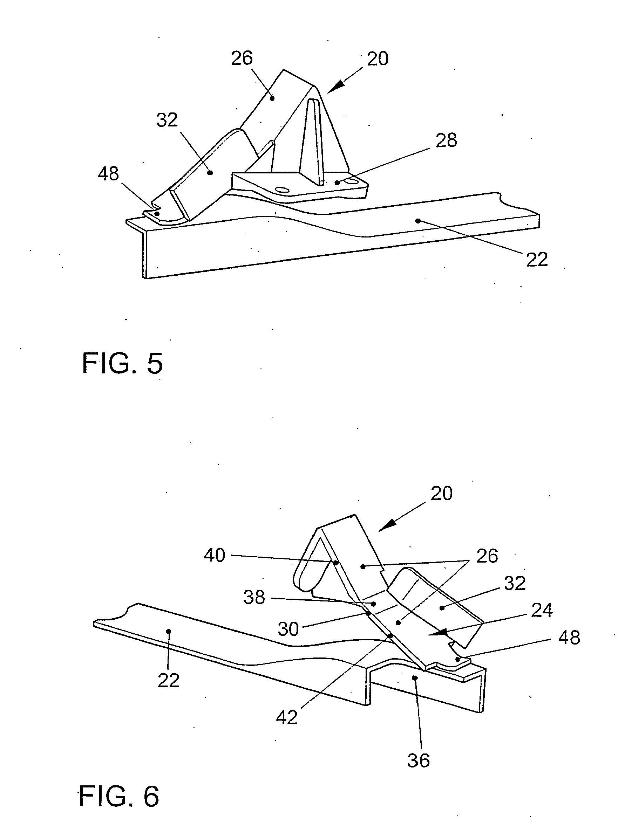

Der Gurtschlossrampe 20 ist in diesem Ausführungsbeispiel eine Gleitschiene 22 zugeordnet (Figuren 5 und 6). Die Gleitschiene 22 ist, nicht wie die Gurtschlossrampe 20 mit dem Sitzteil 14, sondern direkt oder über Zwischenbauteile fest mit dem Fahrzeugrahmen verbunden. Die Gurtschlossrampe 20 steht während der Bewegung des Sitzes 10 aus der Nichtgebrauchsstellung in die Gebrauchsstellung über einen daran bevorzugt einstückig ausgebildeten abgefederten Abschnitt des Gurtschlosses 18 mit der Gleitschiene 22 gleitend in Kontakt. In diesem Ausführungsbeispiel übernimmt dies ein abgefedertes Element 24 (Rampenabschnitt 42) des Gurtschlosses 18. Das abgefederte Element 24 weist als Gleitfläche für das Gurtschloss die Rampenfläche 26 des Rampenabschnitts 42 auf. Das abgefederte Element 24 ist wenigstens in einer Richtung, bevorzugt vertikal, auf der Gleitschiene 22 geführt. An seinem dem Gurtschloss 18 zugewandten Ende weist der abgefederte Abschnitt eine Zunge 48 auf, auf welcher das Gurtschloss 18 mit seinem freien Ende in der Nichtgebrauchsstellung des Sitzes 10 ruht. In diesem zweiten Ausführungsbeispiel ist die Gurtschlossrampe 20 mit ihrem Rampenfuß 28 fest mit dem Sitzteil 14 derart verbunden (festgelegt), dass die Gurtschlossrampe 20 mit ihrer Rampenfläche 26 des unteren Rampenabschnitts 42, beim Überführen des Sitzes 10 aus der Nichtgebrauchsstellung in die Gebrauchsstellung, das Gurtschloss 18 zuerst beginnend mit ihrer Zunge 48 sanft die Rampenschräge entlang über das Filmscharnier 38 hinaus, auf den oberen Rampenabschnitt 40 und weiter nach oben bis in die gewünschte Position bewegt, in welcher das Gurtschloss 18 für einen Fahrzeuginsassen bequem bedienbar ist. Während dieser Bewegung gleitet die Zunge 48 auf der Gleitschiene 22 entlang und tastet ihr Höhenprofil ab. Die Zunge 48 bewegt dann zusätzlich zur Belegung der Gurtschlossrampe 20 den unteren Rampenabschnitt 42 der Gurtschlossrampe 20 (siehe nächster Abschnitt). Ferner können die Gleitschiene 22 (Ausnehmung 36) und auch das abgefederte Element 24 der Gurtschlossrampe 20 teilweise ausgeschnitten sein, um wenigstens einen Teil der Gurtschlossbefestigung 34 aufzunehmen beziehungsweise um nicht mit der Gurtschlossbefestigung 34 zu kollidieren, und es so zu ermöglichen, dass die Gurtschlossrampe 20 wenigstens teilweise art der Gurtschlossbefestigung 34 vorbeiführbar ist.

In diesem Ausführungsbeispiel ist die Gurtschlossrampe 20 nur teilweise mittels der Gleitschiene 22 geführt, da der Rampenfuß 28 am Sitzteil 14 festgelegt ist und nur das abgefederte Element 24 (Rampenabschnitt 42) auf der Gleitschiene 22 geführt ist. Somit bewegt sich nur das abgefederte Element 24 aufgrund einer Einflusswirkung der Gleitschiene 22, während der Rest der Gurtschlossrampe 20 (Rampenfuß 28, der obere Teil der Rampe 30, das heißt der Rampenabschnitt 40 mit seiner Rampenfläche 26) ausschließlich einer Bewegungsbeeinflussung durch das Sitzteil 14 unterliegt. Nur das abgefederte Element 24 unterliegt zwei sich auswirkenden Einflüssen; einerseits der Bewegung der gesamten Gurtschlossrampe 20 aufgrund der Bewegung des Sitzteils 14 und andererseits einer Beeinflussung durch die Gleitschiene 22, im vorliegenden Beispiel durch ihr Höhenprofil. Mit einem solchen Höhenprofil ist es möglich, eine Bewegung des abgefederten Elements 24 während des Überführens des Sitzes 10 aus der Nichtgebrauchsstellung in die Gebrauchsstellung zu bestimmen. Man wählt dieses Profil derart, dass ein optisch angenehm anzusehenes Auftauchen des Gurtschlosses 18 aus der Ausnehmung 16 auftritt.

Personenkraftwagen besitzen heutzutage in der Regel eine so genannte geteilte Rückbank, um einerseits Sperrgut zu transportieren und andererseits gleichzeitig wenigstens noch einen Fahrgast auf der Rücksitzbank aufzunehmen. Das heißt, es muss für den Transport für Sperrgut nicht die gesamte Rückenlehne der Rückbank umgelegt werden, sondern nur noch ein Teilsegment von dieser. Eine Fortentwicklung davon besteht in einer Teilung nicht in der Längsmitte der Bank, sondern derart, dass die Rückbank eine so genannte 40%- und eine so genannte 60%-Seite aufweist. Mit anderen Worten wird die Rückbank ihrer Länge nach (Querrichtung des Fahrzeugs) im Verhältnis von etwa 2 : 3 geteilt. Dies ermöglicht es, unter Umständen zwei Personen auf der Rücksitzbank und zusätzlich noch Sperrgut innerhalb des Fahrzeugs zu transportieren.

Bauartbedingt eignet sich für die 60%-Seite der Rücksitzbank eine Gurtschlossrampe 20 gemäß der ersten Ausführungsform der Erfindung und für die 40%-Seite der Rücksitzbank eignet sich eine Gurtschlossrampe 20 mit zugeordneter Gleitschiene 22 gemäß der zweiten Ausführungsform, so dass auf das Vorhandensein - nicht dargestellt - von Führungsschienen für die Sitzteile Rücksicht genommen werden kann.

Aufgrund gegebener Struktur- und Bauraumverhältnisse in einem Fahrzeug ist auf der 60%-Seite keine Gleitschiene 22 notwendig, da mehr Bauraum zur Verfügung steht, um das Gurtschloss 18 in der Ausnehmung 16 zu versenken und, beim Wiederaufrichten der Lehne in die Gebrauchsstellung, mit einer Gurtschlossrampe 20 zu führen. Hierbei muss die Gurtschlossrampe 20 keinen Höhenunterschied mit Hilfe einer Gleitschiene 22 ausgleichen, da sie keine zusätzliche vertikale Bewegung ausführen muss, sondern kann direkt an einer Sitzwanne montiert und durch diese geführt werden.

Die Ausnehmungen 16 für die Gurtschlösser 18 befinden sich jeweils im Sitzkissen bzw. Sitzteil 14 unterhalb des Schwenkbereichs der Gurtschlösser 18, damit diese, bedingt durch den Druck der Lehnpolster bzw. Rückenlehne 12, in die Ausnehmungen 16 abtauchen können.

In einer bevorzugten Ausführungsform der Erfindung befindet sich hinten an einem Mittelabschnitt der 60%-Seite der Rücksitzbank die Gurtschlossrampe 20 ohne Gleitschiene 22, wohingegen sich die Gurtschlossrampe 20 mit Gleitschiene 22 hinten an der nach innen in das Fahrzeug gewandten Seite der 40%-Seite der Rücksitzbank befindet.

Ein drittes Gurtschloss 18 liegt bevorzugt an der rechten Seite eines Mittelsitzplatzes auf der Rücksitzbank auf (Gebrauchsstellung) und kann beim überführen der Rücksitzbank in die Nichtgebrauchsstellung durch einen Freiraum geführt werden, der zwischen Lehnenpolster und vorauseilender Sitzwanne entsteht. Daher ist keine Ausnehmung 16 im Polster vorgesehen. Durch eine andersgeartete Anbindung des aufliegenden Gurtschlosses 18 an die Sitzstruktur (Drahtseil mit 90° Biegung) richtet es sich nach einem Klappvorgang immer selbsttätig auf beziehungsweise wird durch das Sitzkissenpolster in die korrekte Position aufgestellt. Daher ist keine Gurtschlossrampe 20 notwendig. Andere Ausführungsformen für das dritte Gurtschloss 18 sind jedoch möglich, so z. B. ein 'drittes' versenkbares Gurtschloss 18 mit zusammenwirkender Gurtschlossrampe 20 mit oder auch ohne Gleitschiene 22.

### BEZUGSZEICHENLISTE

- 10: Sitz, Rückbank, Rücksitz-(bank)
- 12: Rückenlehne
- 14: Sitzteil
- 16: Ausnehmung
- 18: Gurtschloss
- 18': Gurtschloss in Nichtgebrauchsstellung
- 20: Gurtschlossrampe
- 22: Gleitschiene
- 24: abgefedertes Element
- 26: Rampenfläche
- 28: Rampenfuß
- 30: Rampe
- 32: Abdeckung
- 34: Gurtschlossbefestigung
- 36: Ausnehmung
- 38: Filmscharnier
- 40: Rampenabschnitt
- 42: Rampenabschnitt
- 44: Federarm
- 46: Bolzen
- 48: Zunge

## Patentansprüche

1. Sitz, insbesondere Kraftfahrzeugsitz, mit einem Sitzteil (14) und einer Rückenlehne (12), wobei die Rückenlehne (12) aus einer Nichtgebrauchsstellung des Sitzes (10) heraus in eine Gebrauchsstellung mit einer im Wesentlichen vertikalen Position der Rückenlehne (12) überführbar ist, und der Sitz (10) ferner eine für ein Gurtschloss (18) eines Sicherheitsrückhaltesystems im Sitzteil (14) oder in der Rückenlehne (12) vorgesehene Ausnehmung (16) aufweist, in welche das Gurtschloss (18) in der Nichtgebrauchsstellung des Sitzes (10) hineinverschwenkt ist, **dadurch gekennzeichnet, dass** dem Sitzteil (14) beziehungsweise der Rückenlehne (12) eine Gurtschlossrampe (20) derart zugeordnet ist, dass beim Bewegen des Sitzes (10) aus der Nichtgebrauchsstellung in die Gebrauchsstellung die Gurtschlossrampe (20) das Gurtschloss (18) aus der Ausnehmung (16) herausschwenkt.

2. Sitz nach Anspruch 1, **dadurch gekennzeichnet, dass** die Gurtschlossrampe (20) im Sitzteil (14) oder in der Rückenlehne (12) festgelegt ist.

3. Sitz nach Anspruch 1 oder 2, **dadurch gekennzeichnet, dass** das Sitzteil (14) beim Überführen des Sitzes (10) aus der Nichtgebrauchsstellung in die Gebrauchsstellung horizontal, bevorzugt in Vorwärtsfahrtrichtung, bewegbar ist.

4. Sitz nach einem der Ansprüche 1 bis 3, **dadurch gekennzeichnet, dass** die Rückenlehne (12) beim Überführen des Sitzes (10) aus der Nichtgebrauchsstellung in die Gebrauchsstellung klappbar und/oder horizontal bewegbar ist.

5. Sitz nach einem der Ansprüche 1 bis 4, **dadurch gekennzeichnet, dass** der Gurtschlossrampe (20) eine mit der Fahrzeugkarosserie fest verbundene Gleitschiene (22) zugeordnet ist, auf welcher die Gurtschlossrampe (20) in wenigstens einer Richtung, bevorzugt vertikal, geführt ist.

6. Sitz nach Anspruch 5, **dadurch gekennzeichnet, dass** die Gurtschlossrampe (20) ein abgefedertes Element (24) aufweist, mittels welchem die Gurtschlossrampe (20) in federndem Kontakt mit der Gleitschiene (22) steht.

7. Sitz nach Anspruch 6, **dadurch gekennzeichnet, dass** das abgefederte Element (24) an der Gurtschlossrampe (20) mittels eines steifen Filmscharniers (38) ausgebildet ist.

8. Sitz nach einem der Ansprüche 5 bis 7, **dadurch gekennzeichnet, dass** ein Höhenprofil der Gleitschiene (22) einer gewünschten Aufrichtbewegung des Gurtschlosses (18) entsprechend gewählt ist.

9. Sitz nach einem der Ansprüche 1 bis 8, **dadurch gekennzeichnet, dass** eine Rampenfläche (26) der Gurtschlossrampe (20) an mindestens einer Längsseite von der Rampenfläche aufgebogen ist, um eine bessere Führung des Gurtschlosses (18) auf der Gurtschlossrampe (20) zu ermöglichen.

10. Sitz nach einem der Ansprüche 1 bis 9, **dadurch gekennzeichnet, dass** die Rampenfläche (26) der Gurtschlossrampe (20) mit der Horizontalen einen Winkel zwischen 20° und 60°, bevorzugt 35° bis 45°, einnimmt.

11. Sitz nach einem der Ansprüche 1 bis 10, **dadurch gekennzeichnet, dass** die Gurtschlossrampe (20) einstückig aus Kunststoff gefertigt ist.

12. Sitz, insbesondere Fahrzeugrücksitzbankabschnitt, mit wenigstens zwei Gurtschlossrampen (20), jeweils gemäß einem der vorhergehenden Ansprüche.

13. Sitz gemäß Anspruch 12, wobei wenigstens eine der Gurtschlossrampen (20) derart ausgebildet ist, dass sie mit einer Gleitschiene (22) zusammenwirkt.

14. Sitz gemäß einem der Ansprüche 12 oder 13, wobei der Sitz (10) in Querrichtung des Fahrzeugs wenigstens in zwei Abschnitte aufgeteilt ist.

15. Sitz gemäß Anspruch 14, wobei der Sitz (10) in zwei Abschnitte in einem Verhältnis von im Wesentlichen 2 zu 3, resultierend in eine 40%-Seite und eine 60%-Seite des Sitzes (10), geteilt ist.

16. Sitz gemäß Anspruch 15, wobei sich an der 40%-Seite des Sitzes (10) eine Gurtschlossrampe (20) mit einer mit ihr zusammenwirkenden Gleitschiene (22) und an der 60%-Seite des Sitzes (10) eine Gurtschlossrampe (20) ohne korrespondierende Gleitschiene (22) befindet.

17. Sitz gemäß einem der Ansprüche 12 bis 16, wobei ein drittes, in der Gebrauchsstellung des Sitzes (10) auf dem Sitz (10) aufliegendes Gurtschloss (18) vorgesehen ist, dass ohne eine Gurtschlossrampe (20) zusammenwirkt.

18. Fahrzeug, insbesondere Kraftfahrzeug, insbesondere Personenkraftwagen, mit wenigstens einem Sitz (10), gemäß einem der vorhergehenden Ansprüche.

## Claims

1. Seat, in particular motor vehicle seat, having a seat part (14) and having a backrest (12), with it being possible for the backrest (12) to be moved from a non-use position of the seat (10) into a use position with a substantially vertical position of the backrest (12), and with the seat (10) also having a recess (16) which is provided in the seat part (14) or in the backrest (12) for a belt buckle (18) of a safety restraint system, into which recess the belt buckle (18) is pivoted when the seat (10) is in the non-use position, **characterized in that** a belt buckle ramp (20) is assigned to the seat part (14) or to the backrest (12) in such a way that, during a movement of the seat (10) from the non-use position into the use position, the belt buckle ramp (20) pivots the belt buckle (18) out of the recess (16).

2. Seat according to Claim 1, **characterized in that** the belt buckle ramp (20) is fixed in the seat part (14) or in the backrest (12).

3. Seat according to Claim 1 or 2, **characterized in that** the seat part (14) can be moved horizontally, preferably in the forward direction, during a movement of the seat (10) from the non-use position into the use position.

4. Seat according to one of Claims 1 to 3, **characterized in that** the backrest (12) can be folded and/or moved horizontally during a movement of the seat (10) from the non-use position into the use position.

5. Seat according to one of Claims 1 to 4, **characterized in that** the belt buckle ramp (20) is assigned a slide rail (22) which is fixedly connected to the vehicle body and on which the belt buckle ramp (20) is guided in at least one direction, preferably vertically.

6. Seat according to Claim 5, **characterized in that** the belt buckle ramp (20) has a spring-loaded element (24), by means of which the belt buckle ramp (20) is in spring-loaded contact with the slide rail (22).

7. Seat according to Claim 6, **characterized in that** the spring-loaded element (24) is formed on the belt buckle ramp (20) by means of a rigid film hinge (38).

8. Seat according to one of Claims 5 to 7, **characterized in that** a height profile of the slide rail (22) is selected corresponding to a desired setting-upright movement of the belt buckle (18).

9. Seat according to one of Claims 1 to 8, **characterized in that** a ramp surface (26) of the belt buckle ramp (20) is bent up from the ramp surface at at least one longitudinal side in order to enable better guidance of the belt buckle (18) on the belt buckle ramp (20).

10. Seat according to one of Claims 1 to 9, **characterized in that** the ramp surface (26) of the belt buckle ramp (20) encloses an angle of between 20° and 60°, preferably of 35° to 45°, with the horizontal.

11. Seat according to one of Claims 1 to 10, **characterized in that** the belt buckle ramp (20) is produced in one piece from plastic.

12. Seat, in particular vehicle rear seat bench section, having at least two belt buckle ramps (20) in each case according to one of the preceding claims.

13. Seat according to Claim 12, with at least one of the belt buckle ramps (20) being designed so as to interact with a slide rail (22).

14. Seat according to one of Claims 12 or 13, with the seat (10) being split into at least two sections in the transverse direction of the vehicle.

15. Seat according to Claim 14, with the seat (10) being split into two sections in a ratio of substantially 2 to 3, resulting in a 40% side and a 60% side of the seat (10).

16. Seat according to Claim 15, with a belt buckle ramp (20) with a slide rail (22) which interacts with said belt buckle ramp (20) being situated at the 40% side of the seat (10), and with a belt buckle ramp (20) without a corresponding slide rail (22) being situated at the 60% side of the seat (10).

17. Seat according to one of Claims 12 to 16, with a third belt buckle (18) being provided which lies on the seat (10) when the seat (10) is in the use position, which belt buckle (18) interacts without a belt buckle ramp (20).

18. Vehicle, in particular motor vehicle, in particular passenger vehicle, having at least one seat (10) according to one of the preceding claims.

## Revendications

1. Siège, en particulier siège de véhicule automobile, avec une partie d'assise (14) et un dossier (12), dans lequel le dossier (12) peut passer d'une position de non utilisation du siège (10) à une position d'utilisation présentant une position essentiellement verticale du dossier (12), et le siège (10) présente en outre une cavité (16) prévue dans la partie d'assise (14) ou dans le dossier (12) pour un système de verrouillage de ceinture (18) d'un système de retenue de sécurité, dans laquelle le système de verrouillage de ceinture (18) est basculé lorsque le siège (10) se trouve en position de non utilisation, **caractérisé en ce qu'**une rampe (20) du système de verrouillage de ceinture est associée à la partie d'assise (14) ou bien au dossier (12), de telle manière que, lors du déplacement du siège (10) de la position de non utilisation à la position d'utilisation, la rampe (20) du système de verrouillage de ceinture bascule le système de verrouillage de ceinture (18) hors de la cavité (16).

2. Siège selon la revendication 1, **caractérisé en ce que** la rampe (20) du système de verrouillage de ceinture est fixée dans la partie d'assise (14) ou dans le dossier (12).

3. Siège selon la revendication 1 ou 2,
**caractérisé en ce que** la partie d'assise (14) est déplaçable horizontalement, de préférence dans la direction de la marche avant, lors du passage du siège (10) de la position de non utilisation à la position d'utilisation.

4. Siège selon l'une quelconque des revendications 1 à 3, **caractérisé en ce que** le dossier (12) est rabattable et/ou est déplaçable horizontalement lors du passage du siège (10) de la position de non utilisation à la position d'utilisation.

5. Siège selon l'une quelconque des revendications 1 à 4, **caractérisé en ce qu'**un rail de glissement (22) solidaire de la carrosserie du véhicule est associé à la rampe (20) du système de verrouillage de ceinture, sur lequel la rampe (20) du système de verrouillage de ceinture est guidée dans au moins une direction, de préférence verticalement.

6. Siège selon la revendication 5, **caractérisé en ce que** la rampe (20) du système de verrouillage de ceinture présente un élément à ressort (24), au moyen duquel la rampe (20) du système de verrouillage de ceinture est en contact élastique avec le rail de glissement (22).

7. Siège selon la revendication 6, **caractérisé en ce que** l'élément à ressort (24) est formé sur la rampe (20) du système de verrouillage de ceinture au moyen d'une charnière pelliculaire rigide (38).

8. Siège selon l'une quelconque des revendications 5 à 7, **caractérisé en ce qu'**un profil en hauteur du rail de glissement (22) est choisi en fonction d'un mouvement de redressement désiré du système de verrouillage de ceinture (18).

9. Siège selon l'une quelconque des revendications 1 à 8, **caractérisé en ce qu'**une face de rampe (26) de la rampe (20) du système de verrouillage de ceinture est courbée sur au moins un côté longitudinal de la face de rampe, afin de permettre un meilleur guidage du système de verrouillage de ceinture (18) sur la rampe (20) du système de verrouillage de ceinture.

10. Siège selon l'une quelconque des revendications 1 à 9, **caractérisé en ce que** la face de rampe (26) de la rampe (20) du système de verrouillage de ceinture forme un angle compris entre 20° et 60°, de préférence entre 35° et 45°, avec l'horizontale.

11. Siège selon l'une quelconque des revendications 1 à 10, **caractérisé en ce que** la rampe (20) du système de verrouillage de ceinture est fabriquée d'une seule pièce en matière plastique.

12. Siège, en particulier partie de banquette arrière de véhicule, comportant au moins deux rampes (20) de système de verrouillage de ceinture, chacune selon l'une quelconque des revendications précédentes.

13. Siège selon la revendication 12, dans lequel au moins une des rampes (20) de système de verrouillage de ceinture est configurée de telle manière qu'elle coopère avec un rail de glissement (22).

14. Siège selon l'une des revendications 12 ou 13, dans lequel le siège (10) est divisé en au moins deux parties dans la direction transversale du véhicule.

15. Siège selon la revendication 14, dans lequel le siège (10) est divisé en deux parties dans un rapport essentiellement de 2 à 3, conduisant à un côté de 40 % et un côté de 60 % du siège (10).

16. Siège selon la revendication 15, dans lequel il se trouve sur le côté de 40 % du siège (10) une rampe (20) de système de verrouillage de ceinture avec un rail de glissement (22) coopérant avec elle et sur le côté de 60 % du siège (10) une rampe (20) de système de verrouillage de ceinture sans rail de glissement (22) correspondant.

17. Siège selon l'une quelconque des revendications 12 à 16, dans lequel il est prévu un troisième système de verrouillage de ceinture (18), reposant sur le siège (10) dans la position d'utilisation du siège (10), qui coopère sans rampe (20) de système de verrouillage de ceinture.

18. Véhicule, en particulier véhicule automobile, en particulier voiture automobile, comportant au moins un siège (10) selon l'une quelconque des revendications précédentes.
